# FASCICULE DE BREVET EUROPEEN

(11) **EP 1 207 002 B1**
(45) Date de publication et mention de la délivrance du brevet: **17.10.2007**
(21) Numéro de dépôt: 01402795.7
(22) Date de dépôt: 26.10.2001
(51) Int. Cl.: B23K 35/40, B21C 37/08

(54) **Procédé et installation de fabrication de tubes métalliques soudés en continu, tels des fils fourrés de soudage**
Verfahren und Vorrichtung zur Herstellung von durchlaufgeschweissten Metallrohren insbesondere von Fulldrähten zum Schweissen
Process and device for the manufacturing of continuously welded metal tubes such as flux-cored welding wires

(30) Priorité: 17.11.2000 FR 0014872
(43) Date de publication de la demande: 22.05.2002
(73) Titulaire: L'AIR LIQUIDE, Société Anonyme pour l'Etude et l'Exploitation des Procédés Georges Claude, 75007 Paris (FR); AIR LIQUIDE WELDING FRANCE, 75007 Paris (FR)
(72) Inventeur: Bonnet, Christian, 95650 Puiseux-Pontoise (FR)
(74) Mandataire: Pittis, Olivier

(56) Documents cités:
- WO-A-98/25727
- DE-A- 19 635 843
- PATENT ABSTRACTS OF JAPAN vol. 1997, no. 06, 30 juin 1997 (1997-06-30) & JP 09 029471 A (TAIHO KOGYO CO LTD), 4 février 1997 (1997-02-04)
- PATENT ABSTRACTS OF JAPAN vol. 006, no. 033 (M-114), 27 février 1982 (1982-02-27) & JP 56 148494 A (NIPPON STEEL CORP), 17 novembre 1981 (1981-11-17)

## Description

La présente invention est relative à un procédé de fabrication de tubes soudés en continu, ces tubes pouvant être remplis de poudres pulvérulentes ou granulées avant d'être soudés. Les fils fourrés destinés au soudage à l'arc constituent un exemple de tubes pouvant être obtenus grâce au procédé de fabrication de l'invention.

Habituellement, pour fabriquer un tube en continu, c'est-à-dire de manière automatisée et industrielle, on part d'une bande métallique appelée feuillard dont la largeur et l'épaisseur sont adaptées au tube que l'on veut produire. Ce feuillard est d'abord formé en "U" puis en "O" au moyen d'une succession de galets qui permettent de rapprocher les bords longitudinaux à souder l'un de l'autre.

Si le tube doit contenir des poudres pulvérulentes ou granulées, celles-ci sont introduites dans la forme en "U" au moyen d'un tapis qui se déroule en synchronisme avec l'avance du feuillard, la quantité de poudre étant ajustée par le réglage de la hauteur de poudre entraînée par le tapis.

La soudure des rives ou bords longitudinaux du feuillard est effectuée en fin de formage en "O". Pour ce faire, trois procédés de soudage sont principalement utilisés pour la fabrication de tubes à partir de feuillard, à savoir le procédé de soudage "TIG multi-cathodes" (Tungsten Inet gas), le procédé de soudage par "Haute Fréquence", et le procédé de soudage Laser.

Le procédé de soudage "TIG multi-cathodes" est le mieux adapté lorsque l'on doit souder un tube préalablement rempli de poudre, tels les mélanges de poudres que l'on peut rencontrer à l'intérieur des fils fourrés destinés au soudage à l'arc. L'augmentation du nombre d'électrodes et la disposition particulière des prises de masse décrites dans le document EP-A-896 853 permet d'accroître significativement la vitesse de soudage accessible à ce procédé, néanmoins celle-ci reste faible si on la compare à la vitesse pouvant être atteinte en soudage par «Haute Fréquence» de tubes vides.

Le soudage par haute fréquence (HF) est bien adapté aux matériaux ferromagnétiques. Néanmoins, lorsque le tube à souder contient des poudres non totalement amagnétiques, celles-ci, sous l'effet du champs magnétique très intense créé par le courant de soudage haute fréquence, sont "aspirées" et viennent contaminées la soudure, ce qui provoque des défauts ou pour le moins une grande fragilité du joint soudé au point que celui-ci ne peut pas supporter sans rupture les transformations ultérieures telles que laminage ou tréfilage.

Un certain nombre de moyens ont été développés pour éviter ce phénomène ou en limiter les conséquences. A ce titre, on peut citer les documents EP-A-158 691, EP-A-158 693, EP-A-589 470, US-A-4,524,169, US-A-4,632,882 et US-A-5,192,016.

Toutefois, la plupart des solutions préconisées par ces documents n'ont pas eu de prolongement industriel ou alors, lorsque cela a été le cas, le procédé de fabrication qui en résultait engendrait d'autres problèmes, notamment des contraintes fortes quant aux poudres de remplissage utilisables et aux investissements très coûteux que l'on ne pouvait amortir qu'avec une production de très grande masse.

Par ailleurs, le procédé de soudage par faisceau Laser est de plus en plus utilisé pour la fabrication de tubes car il permet d'atteindre des vitesses de soudage supérieures à ce qui est classiquement possible en TIG multi-cathodes et celles-ci sont quasiment indépendantes de la nature du feuillard utilisé, à savoir un feuillard ferromagnétique ou non. Cependant, il reste moins productif que le soudage HF lorsque le matériau à souder est ferromagnétique.

A notre connaissance, le procédé de soudage laser n'est presque pas utilisé aujourd'hui dans la fabrication de tubes préalablement remplis de poudre (un exemple étant connu de JP 56148494). Cela résulte du fait que les grandes vitesses de soudage ne sont accessibles au procédé de soudage par faisceau laser que parce que celui ci autorise un soudage dit par « keyhole » (trou de serrure ou jet débouchant), la très grande densité de puissance du faisceau au voisinage du point de focalisation provoquant la volatilisation du matériau sur toute son épaisseur et engendrant la formation d'un trou.

Le mouvement relatif faisceau/pièce fait que ce trou se déplace et que le métal fondu à la périphérie du trou en avant de celui-ci, le contourne et va constituer le bain liquide puis le cordon de soudage après solidification en arrière du « keyhole ».

Ainsi, une grande partie de l'énergie du faisceau laser est transmise dans le joint à souder sur toute son épaisseur sans que la conduction n'ait à intervenir. C'est la raison pour laquelle ce procédé permet d'atteindre de grandes vitesses de soudage.

Toutefois, ce processus implique qu'une partie non négligeable de l'énergie du faisceau traverse toute l'épaisseur du tube, c'est-à-dire selon un jet débouchant, et ne contribue donc pas à la réalisation du joint soudé si bien que l'on est obligé d'utiliser une puissance laser supérieure à celle qui serait strictement nécessaire à la réalisation du joint soudé.

Dans le cas du soudage d'un tube vide, cette énergie inutilisée peut être absorbée par la face opposée du tube en cours de soudage ou par un pare-feu c'est-à-dire une pièce, en général refroidie, disposée à l'intérieur du tube au niveau du « keyhole » et interceptant le faisceau traversant.

Toutefois, cette manière de souder n'est pas idéale car, dans le premier cas, elle peut engendrer une détérioration de l'intérieur du tube, c'est-à-dire de la face "opposée" à celle en cours de soudage, à l'endroit où vient frapper le faisceau laser traversant et, dans le deuxième cas, car elle complique considérablement l'installation en rendant obligatoire l'insertion d'une pièce pare-feu et de moyens de refroidissement appropriés.

Par ailleurs, dans le cas d'un tube rempli de poudre ou de granulés avant soudage, il n'y a généralement pas la place de disposer un pare-feu si bien que l'énergie traversante va atteindre le mélange de poudres de remplissage et provoquer la fusion d'une partie de ce mélange. En effet, les mélanges de poudres de remplissage des fils fourrés destinés au soudage sont habituellement constitués d'alliages métalliques (ferromanganèse, ferrosilicium, ferrochrome, silicomanganèse, ferromolybdène, Nickel, ...), de constituants formateurs de laitier (rutile (TiO₂), spathfluor (CaF₂), Silice (SiO₂), magnésie (MgO), alumine (Al₂O₃), cryolithe (Na₃AlF₆), carbonates (CaCO₃, MgCO₃...) ...) d'éléments ionisants (composés contenant du sodium et/ou du potassium et/ou du lithium), de désoxydants (magnésium, aluminium, silico-calcium ...). Dès lors, la fusion d'une partie de ce mélange par l'énergie traversante du faisceau laser peut engendrer la décomposition de certains composants et la formation d'un alliage des matières fondues et non décomposées.

De par la nature des constituants présents, cet alliage "incontrôlable" sera très dur et provoquera la rupture du tube ainsi rempli et soudé, lors des opérations ultérieures de laminage et/ou tréfilage qui sont indispensables pour obtenir un fil fourré de soudage dont le diamètre, est selon les utilisations, habituellement compris entre 0,8 et 2,4 mm, le plus souvent environ 1,2 mm.

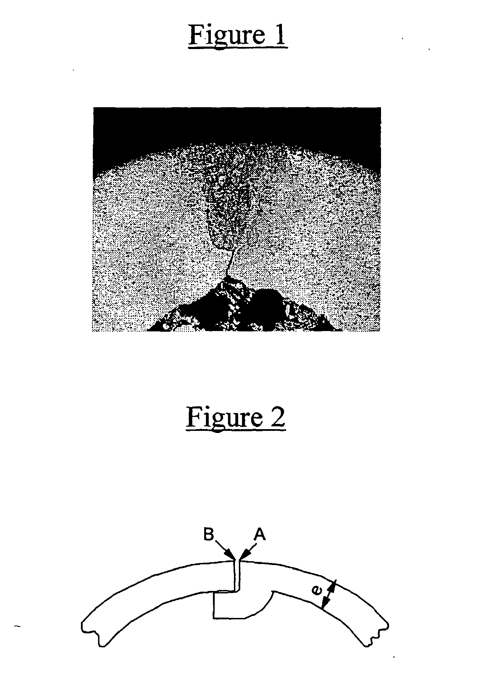

Deux moyens pourraient être envisagés pour éviter la formation de cet alliage dur qui rend impossible le laminage/tréfilage ultérieur du tube ainsi fabriqué, à savoir :
- soit assembler les deux rives du feuillard après formage en « U », remplissage et formage en « O » par une soudure laser à pénétration partielle, comme montré sur la figure 1,
- soit conférer au feuillard, avant formage en « U », une forme telle qu'après remplissage et formage en « O », on se retrouve dans une configuration de soudage sur bord soyé, ce soyage jouant le rôle de pare-feu, ainsi que schématisé sur la figure 2.

Toutefois, le premier de ces deux moyens, bien qu'applicable et pouvant conduire à des résultats satisfaisants en laboratoire n'est pas adapté à une production industrielle. En effet, la moindre variation dans l'accostage des deux rives (jeu, désalignement, position relative faisceau / plan de joint) ou de la puissance du faisceau laser arrivant sur la pièce font que l'on ne peut pas maîtriser la profondeur de pénétration et que l'on passe d'une hauteur soudée de plan de joint très faible et, de ce fait, insuffisante pour supporter sans se rompre les opérations de laminage/tréfilage ultérieures à une pénétration complète et donc à un faisceau débouchant entraînant la fusion d'une partie des poudres de remplissage avec les conséquences susmentionnées.

Par ailleurs, le second moyen est théoriquement séduisant mais aussi pratiquement impossible à maîtriser industriellement car un simple formage ne peut pas permettre d'obtenir un angle vif au niveau du bord soyé en regard de la partie supérieure du plan de joint (point A sur fig.2). De ce fait, les deux faces à souder ne peuvent pas être parfaitement jointives sur toute la hauteur (forme en ½ V), ce qui a deux conséquences négatives, à savoir que :
- le métal fondu sera en sous épaisseur après solidification, ce qui constitue un défaut de surface préjudiciable à la bonne tenue du joint lors des opérations ultérieures de laminage/tréfilage, et
- la moindre variation de positionnement du faisceau laser par rapport à l'arête supérieure du bord non soyé (Point B sur fig.2), fait que celui ci rencontre une épaisseur très rapidement variable de "e" à 2e où "e" est l'épaisseur du feuillard utilisé. On comprend alors que, même avec cette préparation des bords, on n'est pas à l'abri de passer d'une soudure partielle du plan de joint à un faisceau débouchant et fondant une partie des poudres sous-jacentes.

Le but de la présente invention est alors de résoudre les problèmes qui se posent avec les procédés de fabrication de tubes connus en proposant un procédé amélioré permettant de souder efficacement les deux bords longitudinaux d'une bande métallique pour obtenir un tube soudé et ce, que le tube soit ou non rempli d'éléments de remplissage, tels de poudres, des granulés ou leurs mélanges.
L'invention concerne alors un procédé de fabrication de tube soudé, en continu, en particulier un tube contenant au moins un élément de remplissage, telle qu'une poudre, à partir d'une feuille métallique formée successivement en "U" puis en "O" par rapprochement progressif de ces deux bords longitudinaux, l'un de l'autre, et soudage desdits bords l'un avec l'autre au moyen d'au moins un faisceau laser, dans lequel l'axe du faisceau laser et l'axe longitudinal du tube forment l'un avec l'autre un angle inférieur à 15°.

Selon le cas, le procédé de l'invention peut comprendre l'une ou plusieurs des caractéristiques suivantes :
- l'axe du faisceau laser et l'axe du tube forment, l'un avec l'autre, un angle inférieur à 10°, de préférence inférieur à 5°, préférentiellement encore un angle approximativement nul.
- l'axe du faisceau laser et l'axe du tube sont approximativement parallèles l'un à l'autre.
- le faisceau laser vient frapper au moins un des bords longitudinaux de la feuille métallique dans l'espace existant entre lesdits deux bords de la feuille à l'endroit où lesdits bords sont rapprochés l'un de l'autre mais pas encore complètement jointifs, de préférence le faisceau laser vient frapper les deux bords de la feuille métallique en des sites sensiblement en regard l'un de l'autre.
- on conforme le faisceau laser de manière à lui conférer à l'endroit où il vient frapper le ou les bords de la feuille, une section elliptique telle que le plus grand axe de ladite section elliptique soit sensiblement parallèle au plan de joint et de longueur inférieure à l'épaisseur de la feuille à souder.
- on opère, au moyen dudit faisceau laser, une fusion des bords sur approximativement la totalité de leur épaisseur.
- le tube est animé d'un mouvement relatif par rapport au faisceau laser, de préférence le tube est entraîné par des galets d'entraînement.
- le tube est entraîné par des galets d'entraînement réglés de façon à assurer un forgeage des deux bords longitudinaux de la feuille métallique, l'un avec l'autre, en exerçant une pression mécanique sur le tube de manière à rapprocher lesdits deux bords l'un de l'autre.
- les galets d'entraînement et de formage sont conçus de manière à ce que l'intersection des plans contenant les faces des bords à assembler se fasse approximativement selon une droite passant par le site ou la zone de jonction des deux bords, l'un avec l'autre.
- le tube contient des éléments de remplissage, de préférence le tube est un fil fourré de soudage.
- le tube est un fil de soudage ayant un diamètre entre 0,8 et 2,4 mm, de préférence de l'ordre de 1,2 mm.

L'invention porte aussi sur une installation automatique de fabrication de tube comprenant :
- des galets d'entraînement agencés pour entraîner et conformer une feuille métallique successivement en "U" puis en "O" par rapprochement des deux bords longitudinaux de ladite feuille,
- des moyens de distribution d'un faisceau laser agencés de manière à ce que l'axe dudit faisceau laser forme avec l'axe de ladite feuille métallique un angle inférieur à 15°, de préférence un angle approximativement nul.

L'invention porte donc sur la fabrication de tubes en continu à partir d'un feuillard formé d'abord en "U" puis en "O" et soudé au moyen d'un faisceau laser. Suivant sa destination, le tube peut être vide au moment du soudage ou au contraire rempli d'un mélange de poudres, plus ou moins complexe, métalliques et/ou non métalliques, comme par exemple les poudres de remplissage des fils fourrés pour le soudage à l'arc. Un tube soudé selon le procédé de l'invention est capable de supporter, après soudage, une transformation sans rupture par laminage et/ou tréfilage jusqu'à son diamètre d'utilisation.

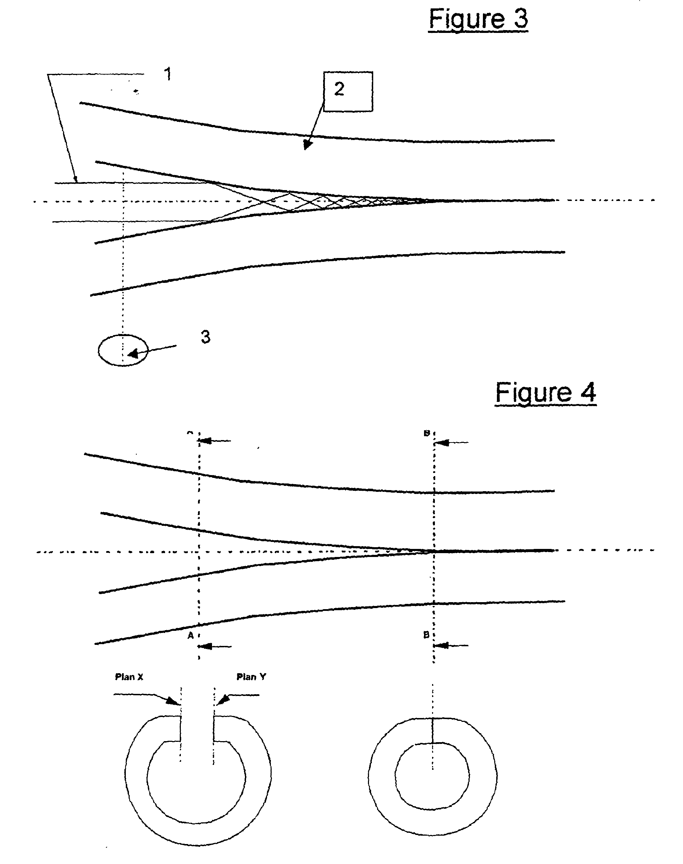

Selon l'invention, le faisceau 1 laser est envoyé préférentiellement parallèlement à l'axe du tube 2 dans l'espace existant entre les rives du feuillard avant que celles-ci ne soient rendues complètement jointives par les galets de formage permettant de produire la forme en « O ». Le système optique permettant de guider le faisceau laser pour lui donner cette orientation, tel un jeu de miroirs pour laser CO₂ ou une fibre optique pour laser YAG, est suivi d'un système optique de mise en forme du faisceau permettant de lui conférer une section 3 elliptique de grand axe parallèle au plan de joint et de longueur légèrement inférieure à l'épaisseur à souder, comme montré sur la figure 3. Une telle géométrie de faisceau 1 permet d'échauffer les faces à assembler sur la quasi-totalité de l'épaisseur (e), la faible portion du plan de joint non intercepté par le faisceau étant chauffée par conduction. Contrairement au soudage traditionnel par « keyhole », une telle disposition permet de transférer à la pièce la totalité de la puissance laser incidente, les faces à assembler jouant le rôle de guide d'onde, en réfléchissant vers l'autre face la partie non absorbée de l'énergie des photons incidents laquelle est finalement transférée au tube au niveau de la jonction des deux faces, comme montré sur la figure 3. Les galets de formage situés au niveau de cette jonction sont réglés de façon à assurer un léger forgeage favorable à la réalisation d'une soudure de qualité.

Pour que le « guide d'onde » constitué par les deux rives, avant que celles-ci ne soient jointives joue pleinement son rôle et permette l'absorption de la quasi totalité de l'énergie incidente, le train de galets de formage est conçu de manière à ce que l'intersection des plans contenant les faces à assembler se fasse sensiblement selon la droite passant par la jonction des deux rives, comme schématisé sur la figure 4.

Après soudage, un recuit intermédiaire pourra être nécessaire afin de recristalliser le tube avant d'arriver au diamètre final si le taux de réduction (section initiale/section finale) engendre un écrouissage trop important en regard des capacités de déformation du matériau constituant l'enveloppe tubulaire, comme décrit par le document EP-A-899 052.

## Revendications

1. Procédé de fabrication de tube soudé, en continu, à partir d'une feuille métallique formée successivement en "U" puis en "O" par rapprochement progressif de ces deux bords longitudinaux, l'un de l'autre, et soudage desdits bords l'un avec l'autre au moyen d'au moins un faisceau laser, dans lequel l'axe du faisceau laser et l'axe longitudinal du tube forment l'un avec l'autre un angle inférieur à 15°.

2. Procédé selon la revendication 1, **caractérisé en ce que** l'axe du faisceau laser et l'axe du tube forment, l'un avec l'autre, un angle inférieur à 10°, de préférence inférieur à 5°.

3. Procédé selon la revendication 1 ou 2, **caractérisé en ce que** l'axe du faisceau laser et l'axe du tube sont approximativement parallèles l'un à l'autre.

4. Procédé selon l'une des revendications 1 à 3, **caractérisé en ce que** le faisceau laser vient frapper au moins un des bords longitudinaux de la feuille métallique dans l'espace existant entre lesdits deux bords de la feuille à l'endroit où lesdits bords sont rapprochés l'un de l'autre mais pas encore complètement jointifs, de préférence le faisceau laser vient frapper les deux bords de la feuille métallique en des sites sensiblement en regard l'un de l'autre.

5. Procédé selon l'une des revendications 1 à 4, **caractérisé en ce que** l'on conforme le faisceau laser de manière à lui conférer à l'endroit où il vient frapper le ou les bords de la feuille, une section elliptique telle que le plus grand axe de ladite section elliptique soit sensiblement parallèle au plan de joint et de longueur inférieure à l'épaisseur de la feuille à souder.

6. Procédé selon l'une des revendications 1 à 5, **caractérisé en ce qu**'on opère, au moyen dudit faisceau laser, une fusion des bords sur approximativement la totalité de leur épaisseur.

7. Procédé selon l'une des revendications 1 à 6, **caractérisé en ce que** le tube est animé d'un mouvement relatif par rapport au faisceau laser, de préférence le tube est entraîné par des galets d'entraînement.

8. Procédé selon l'une des revendications 1 à 7, **caractérisé en ce que** le tube est entraîné par des galets d'entraînement réglés de façon à assurer un forgeage des deux bords longitudinaux de la feuille métallique, l'un avec l'autre, en exerçant une pression mécanique sur le tube de manière à rapprocher lesdits deux bords l'un de l'autre.

9. Procédé selon la revendication 8, **caractérisé en ce que** les galets d'entraînement et de formage sont conçus de manière à ce que l'intersection des plans contenant les faces des bords à assembler se fasse approximativement selon une droite passant par le site ou la zone de jonction des deux bords, l'un avec l'autre.

10. Procédé selon l'une des revendications 1 à 9, **caractérisé en ce que** le tube contient des éléments de remplissage, de préférence le tube est un fil fourré de soudage.

11. Procédé selon l'une des revendications 1 à 10, **caractérisé en ce que** le tube est un fil de soudage ayant un diamètre entre 0,8 et 2,4 mm, de préférence de l'ordre de 1,2 mm.

12. Installation automatique de fabrication de tube comprenant :
- des galets d'entraînement agencés pour entraîner et conformer une feuille métallique successivement en "U" puis en "O" par rapprochement des deux bords longitudinaux de ladite feuille,
- des moyens de distribution d'un faisceau laser agencés de manière à ce que l'axe dudit faisceau laser forme avec l'axe de ladite feuille métallique un angle inférieur à 15°, de préférence un angle approximativement nul.

## Claims

1. Process for the continuous manufacture of a welded tube starting from a metal sheet formed in succession into a "U" and then into an "O" by progressively bringing its two longitudinal edges closer together, and by welding said edges to each other by means of at least one laser beam, in which process the axis of the laser beam and the longitudinal axis of the tube make an angle of less than 15° between them.

2. Process according to Claim 1, **characterized in that** the axis of the laser beam and the axis of the tube form an angle of less than 10°, preferably less than 5°, between them.

3. Process according to Claim 1 or 2, **characterized in that** the axis of the laser beam and the axis of the tube are approximately parallel to each other.

4. Process according to one of Claims 1 to 3, **characterized in that** the laser beam strikes at least one of the longitudinal edges of the metal sheet in the space that exists between said two edges of the sheet at the place where said edges are close together but not yet completely touching, preferably the laser beam striking both edges of the metal sheet at locations substantially facing each other.

5. Process according to one of Claims 1 to 4, **characterized in that** the laser beam is shaped so as to give it, at the place where it strikes the edge or edges of the sheet, an elliptical cross section such that the major axis of said elliptical cross section is substantially parallel to the joint plane and is of smaller length than the thickness of the sheet to be welded.

6. Process according to one of Claims 1 to 5, **characterized in that** the edges are melted over approximately their entire thickness by means of said laser beam.

7. Process according to one of Claims 1 to 6, **characterized in that** the tube is made to undergo a relative movement with respect to the laser beam, the tube preferably being driven by drive rollers.

8. Process according to one of Claims 1 to 7, **characterized in that** the tube is driven by drive rollers set so as to ensure that the two longitudinal edges of the metal sheet are forged together, by exerting mechanical pressure on the tube so as to bring said two edges together.

9. Process according to Claim 8, **characterized in that** the drive and forming rollers are designed so that the intersection of the planes containing the faces of the edges to be joined together lies approximately along a straight line passing through the site or zone where the two edges are joined together.

10. Process according to one of Claims 1 to 9, **characterized in that** the tube contains filling elements, the tube preferably being a flux-cored welding wire.

11. Process according to one of Claims 1 to 10, **characterized in that** the tube is a welding wire having a diameter between 0.8 and 2.4 mm, preferably around 1.2 mm.

12. Automatic tube manufacturing installation comprising:
- drive rollers designed to drive and shape a metal sheet in succession into a "U" and then into an "O" by bringing the two longitudinal edges of said sheet closer together; and
- means for delivering a laser beam, which are arranged so that the axis of said laser beam makes an angle of less than 15°, preferably an approximately zero angle, with the axis of said metal sheet.

## Patentansprüche

1. Verfahren zur Herstellung eines durchgehend geschweißten Rohres ausgehend von einer Metallfolie, die durch zunehmende Annäherung der zwei Längsränder aneinander nacheinander U-förmig und dann O-förmig verformt wird, und durch Verschweißen der Ränder miteinander mittels mindestens eines Laserstrahls, wobei die Achse des Laserstrahles und die Längsachse des Rohres miteinander einen Winkel von weniger als 15° bilden.

2. Verfahren nach Anspruch 1, **dadurch gekennzeichnet, dass** die Achse des Laserstrahls und die Achse des Rohres miteinander einen Winkel von weniger als 10°, vorzugsweise von weniger als 5° bilden.

3. Verfahren nach Anspruch 1 oder 2, **dadurch gekennzeichnet, dass** die Achse des Laserstrahls und die Achse des Rohres annähernd parallel zueinander sind.

4. Verfahren nach einem der Ansprüche 1 bis 3, **dadurch gekennzeichnet, dass** der Laserstrahl auf mindestens einen der Längsränder der Metallfolie in dem zwischen den zwei Rändern der Folie vorhandenen Zwischenraum an der Stelle trifft, wo die Ränder aneinander angenähert sind, jedoch noch nicht vollständig aneinander stoßen, wobei vorzugsweise der Laserstrahl auf die zwei Ränder der Metallfolie an Stellen trifft, die einander etwa gegenüberliegen.

5. Verfahren nach einem der Ansprüche 1 bis 4, **dadurch gekennzeichnet, dass** der Laserstrahl auf eine solche Weise geformt wird, dass ihm an der Stelle, wo er auf den Rand oder die Ränder der Folie trifft, ein elliptischer Querschnitt verliehen wird, derart, dass die größere Achse des elliptischen Querschnitts etwa parallel zur Stoßfläche ist und ein Länge hat, die kleiner als die Dicke der zu schweißenden Folie ist.

6. Verfahren nach einem der Ansprüche 1 bis 5, **dadurch gekennzeichnet, dass** mittels des Laserstrahls ein Schmelzen der Ränder auf annähernd ihrer gesamten Dicke bewirkt wird.

7. Verfahren nach einem der Ansprüche 1 bis 6, **dadurch gekennzeichnet, dass** das Rohr in eine relative Bewegung bezüglich des Laserstrahls versetzt wird, wobei das Rohr vorzugsweise durch Antriebsrollen bewegt wird.

8. Verfahren nach einem der Ansprüche 1 bis 7, **dadurch gekennzeichnet, dass** das Rohr durch Antriebsrollen angetrieben wird, die derart eingestellt sind, dass sie eine Verschmiedung der zwei Längsränder der Metallfolie miteinander sicherstellen, indem sie einen mechanischen Druck auf das Rohr ausüben, derart, dass die zwei Ränder aneinander angenähert werden.

9. Verfahren nach Anspruch 8, **dadurch gekennzeichnet, dass** die Antriebs- und Formrollen derart gestaltet sind, dass der Schnitt der Ebenen, welche die Stirnseiten der zusammenzufügenden Ränder enthalten, annähernd entlang einer Geraden erfolgt, die durch die Stelle oder den Bereich der Aneinanderfügung der zwei Ränder verläuft.

10. Verfahren nach einem der Ansprüche 1 bis 9, **dadurch gekennzeichnet, dass** das Rohr Füllelemente enthält, wobei das Rohr vorzugsweise ein Schweißfülldraht ist.

11. Verfahren nach einem der Ansprüche 1 bis 10, **dadurch gekennzeichnet, dass** das Rohr ein Schweißdraht ist, der einen Durchmesser zwischen 0,8 und 2,4 mm und vorzugsweise in der Größenordnung von 1,2 mm aufweist.

12. Automatische Anlage zur Rohrherstellung, welche umfasst:
- Antriebsrollen, die so beschaffen sind, dass sie eine Metallfolie bewegen und durch Annäherung der zwei Längsränder der Folie nacheinander U-förmig und dann O-förmig verformen,
- Mittel zur Verteilung eines Laserstrahls, die so beschaffen sind, dass die Achse des Laserstrahls mit der Achse der Metallfolie einen Winkel von weniger als 15° und vorzugsweise einen Winkel von annähernd null bildet.
